(19) Europäisches Patentamt

European Patent Office

Office européen des brevets

(11) **EP 1 294 143 A2**

(12) **EUROPÄISCHE PATENTANMELDUNG**

(43) Veröffentlichungstag:
**19.03.2003 Patentblatt 2003/12**

(51) Int Cl.⁷: **H04L 12/56**, H04L 29/06

(21) Anmeldenummer: **02102233.0**

(22) Anmeldetag: **29.08.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **03.09.2001  DE 10143044**

(71) Anmelder: **SIEMENS AKTIENGESELLSCHAFT**
**80333 München (DE)**

(72) Erfinder:
• **Flügel, Sebastian**
  **18057 Rostock (DE)**
• **Giersch, Diethelm**
  **18519 Reinkenhagen (DE)**
• **Rogasch, Volker**
  **17493 Greifswald (DE)**

(54) **Gekennzeichneter Prioritätwarteschlangescheduler**

(57)     Zuteileinrichtung zur Steuerung des Zugriffs von mehreren unterschiedliche Prioritäten aufweisenden Einheiten auf von den Einheiten gemeinsam genutzte Ressourcen.

Die erfindungsgemäße Zuteileinrichtung (SCD) zur Steuerung des Zugriffs von mehreren unterschiedliche Prioritäten (pr0...n) aufweisenden Einheiten (EI0...n) auf von den Einheiten gemeinsam genutzte Ressourcen (RES) weist mehrere jeweils mit einer der Einheiten verbindbare Eingänge (ES0...n) auf, an welche jeweils ein von der jeweiligen Einheit erzeugtes und die Anforderung eines Zugriffs auf die Ressourcen repräsentierendes Anforderungssignal (x0...n) herangeführt ist. Den Eingängen ist jeweils ein Ausgang (AS0...n) zugeordnet. Zwischen den Ein- und Ausgängen ist jeweils ein eine Freigabe-/ Blockierungseinrichtung repräsentierender Selektor (SEL0...n) angeordnet, an welchen das jeweilige Anforderungssignal weitergeleitet ist, wobei die Selektoren kettenförmig miteinander verbunden sind. Die Selektoren sind derart ausgestaltet, dass bei Anliegen von mehreren Anforderungssignalen (x0...n) an zumindest einen Teil der Eingänge (ES0...n) das Anforderungssignal mit der höchsten Priorität an den zugeordneten Ausgang (AS0...n) weitergeleitet wird und das zumindest eine eine niedrigere Priorität aufweisende Anforderungssignal nicht an den jeweils zugeordneten Ausgang weitergeleitet wird. Mit Hilfe des an den Ausgang weitergeleiteten Anforderungssignals (y0...n) wird der Zugriff auf die gemeinsam genutzten Ressourcen (RES) in Abhängigkeit von den Prioritäten der Anforderungssignale bzw. Einheiten gesteuert bzw. zugeteilt.

Durch die Verarbeitung von nur noch einen Datenumfang von jeweils 1 Bit aufweisenden Anforderungssignalen wird der schaltungstechnische und somit auch wirtschaftliche Aufwand zur Realisierung von Zuteilungseinrichtungen bzw. Schedulern minimiert, wobei gleichzeitig eine erhöhte Arbeitsgeschwindigkeit erreicht wird.

FIG 1

EP 1 294 143 A2

**Beschreibung**

Zuteileinrichtung zur Steuerung des Zugriffs von mehreren unterschiedliche Prioritäten aufweisenden Einheiten auf von den Einheiten gemeinsam genutzte Ressourcen.

Bei von mehreren Einheiten bzw. Instanzen gemeinsam genutzten Ressourcen - beispielsweise Übertragungsressourcen - wird der Zugriff auf diese Ressourcen durch eine Zuteileinrichtung - im Folgenden auch als Scheduler bezeichnet - geregelt. Scheduler sind beispielsweise in, gemäß dem asynchronen Transfermodus oder dem TCP/IP-Protokoll konzipierten Kommunikationsnetzen erforderlich.

Bei ATM-Kommunikationsnetzen werden Scheduler beispielsweise in ATM-Steuereinrichtungen (ATM-Controller) zu folgenden Funktionen verwendet:

- Ermitteln des nächsten Ausgangs (Ports), über welchen eine ATM-Zelle über den gemeinsamen Bus übertragen wird - auch als Port-Scheduler bezeichnet -
- Ermitteln, aus welchem von mehreren Ausgangsspeichern (Queues) die nächste ATM-Zelle an einem Port ausgegeben werden soll - auch als Queue-Scheduler bezeichnet,
- Ermitteln des Portes, welcher als nächstes nach der dafür vorgesehenen Sende- oder Empfangsbereitschaft auf den gemeinsamen Bus abgefragt wird - auch als Poll-Scheduler bezeichnet.

Für die Realisierung von Scheduler-Funktionen sind folgende Regeln zu berücksichtigen:

- Der Zugriff der Einheiten bzw. Instanzen kann aktiviert oder deaktiviert werden.
- Eine Steuerung nach Prioritäten soll möglich sein, d.h. Einheiten bzw. Instanzen höherer Priorität werden stets bevorzugt behandelt.
- Die von den Einheiten bzw. Instanzen gemeinsam genutzten Ressourcen soll gleichmäßig verteilt werden, d.h. die Steuerung des Zugriffs soll ohne zeitliche Abhängigkeiten erfolgen.
- Die gemeinsam genutzten Ressourcen sollen unter expliziter Berücksichtigung zeitlicher Abhängigkeiten unter den Instanzen aufgeteilt und dadurch eine Gewichtung ermöglicht werden.

Aktuell sind Scheduler mit sequentieller oder paralleler Struktur bekannt.

Sequentielle Struktur:

Hier werden durch eine Steuereinrichtung nacheinander, d.h. sequentiell alle Instanzen und deren Prioritäten ermittelt und abhängig von Ermittlungsergebnis ein Zwischenwert für die zuteilungsberechtigte Instanz aktualisiert. Wenn eine aktuell abgefragte Instanz eine Zugriffsanforderung auf die gemeinsam genutzten Übertragungsressourcen stellt und eine höhere Priorität aufweist, dann wird eine, diese Instanz eindeutig identifizierende Indentifizierungsinformation - Code - dem Zwischenwert zugewiesen, ansonsten bleibt dieser unverändert. Nachdem alle Instanzen abgefragt wurden, wird der aktuelle Zwischenwert, d.h. die durch diesen repräsentierte Instanz an einen Ausgang ausgegeben.

Die Prioritäten und Anforderungen repräsentierenden Informationen können in schaltungstechnisch einfach zu realisierender Art und Weise in Speichern abgelegt werden und durch einfache Adressierung von der Steuereinrichtung abgefragt werden. Bedingt durch die sequentielle Struktur weist diese bekannte Ausgestaltungsvariante von Zuteileinrichtungen den Nachteil auf, dass zur Abfrage aller Instanzen ein erhöhter Zeitaufwand erforderlich ist.

Parallele Struktur:

Bei der parallelen Struktur wird jeder Instanz eine diese eindeutig identifizierende Code-Information zugewiesen - z.B. Binärcode. Sämtliche jeweils mehrere Bit Datenumfang aufweisende Code-Informationen der die Ressourcen gemeinsam nutzenden Instanzen werden an Eingänge des Schedulers herangeführt. Die prioritätenabhängige Zuteilungssteuerung wird über kombinatorische Schaltungen - im wesentlichen durch Multiplexer - erreicht, wobei an einen Steuerausgang des Schedulers die Code-Information der ermittelten, zuteilungsberechtigten Instanz ausgegeben wird. Die parallele Struktur weist eine schnellere Arbeitsgeschwindigkeit als die sequentielle Struktur auf, hat aber den Nachteil, dass für die Realisierung der parallelen Struktur - d.h. für die Verarbeitung der mehrere Bit Datenumfang aufweisenden Code-Informationen - ein erhöhter schaltungstechnischer Aufwand - d.h. komplexe Kombinatorik - erforderlich ist, was einen erhöhten wirtschaftlichen Aufwand - beispielsweise erhöhter Bedarf an Chipfläche - nach sich zieht.

Sowohl für die sequentielle als auch für die parallele Struktur ist bei der schaltungstechnischen Umsetzung ein erhöhter Aufwand erforderlich, wobei für die Realisierung von Schedulern beispielsweise FPGAs (Field Programmable Gate Array) verwendet werden. Für die erforderliche umfangreiche Kombinatorik werden beispielsweise die in FPGA's vorzugsweise verwendeten Look-up-Tables eingesetzt.

In vielen FPGA-Technologien sind bereits vorgefertigte, aus mehreren Multiplexern bestehende "Carry-Ketten" auf dem Chip untergebracht, die von den Synthese-Werkzeugen in der Regel nur für arithmetische Schaltungen, wie z.B. Addierer, Subtrahierer, Zähler, Vergleicher usw. eingesetzt werden. Der Einsatz von Carry-Ketten zur Realisierung von allgemeinen Kombinatorik-Schaltungen ist jedoch nicht bekannt.

Die Realisierung komplexer Scheduler und insbesondere der hierfür erforderlichen kombinatorischen Logik ist nachteilig mit erhöhten Schaltungsaufwand und somit auch wirtschaftlichem Aufwand verbunden, wobei nur eine relativ langsame Arbeitsgeschwindigkeit erreicht wird.

Der Erfindung liegt somit die Aufgabe zugrunde, den für die Realisierung komplexer Zuteileinrichtungen bzw. Scheduler erforderlichen schaltungstechnischen und somit auch wirtschaftlichen Aufwand zu minimieren und gleichzeitig eine Erhöhung der Arbeitsgeschwindigkeit zu erreichen. Die Aufgabe wird durch eine Zuteileinrichtung gemäß den Merkmalen des Oberbegriffs des Patentanspruchs 1 durch dessen kennzeichnende Merkmale gelöst.

Mit Hilfe der erfindungsgemäßen Zuteileinrichtung wird der Zugriff von daran anschließbaren, informationstechnischen, mehrere unterschiedliche Prioritäten aufweisenden Einheiten auf von den Einheiten gemeinsam genutzte, informationstechnische Ressourcen gesteuert. Die Zuteileinrichtung weist mehrere, jeweils mit einer der Einheiten verbindbare Eingänge auf, an welche jeweils ein von der jeweiligen Einheit erzeugtes und die Anforderung eines Zugriffs auf die Ressourcen repräsentierendes Anforderungssignal herangeführt ist. Der Zugriff auf die gemeinsam genutzten Ressourcen wird in Abhängigkeit von den Prioritäten der Anforderungssignale gesteuert. Der wesentliche Aspekt der erfindungsgemäßen Zuteileinrichtung besteht darin, dass den Eingängen jeweils ein Ausgang zugeordnet ist und dass zwischen den Ein- und Ausgängen jeweils ein eine Freigabe-/Blockierungseinrichtung repräsentierender Selektor angeordnet ist, an welchem das jeweilige Anforderungssignal weitergeleitet ist, wobei die Selektoren kettenförmig miteinander verbunden sind. Bei mehreren an zumindest einem Teil der Eingänge anliegende Anforderungssignalen sind die Selektoren derart ausgestaltet, dass das Anforderungssignal mit der höchsten Priorität an den zugeordneten Ausgang weitergeleitet wird und dass das zumindest eine eine niedrigere Priorität aufweisende Anforderungssignal nicht an den jeweils zugeordneten Ausgang weitergeleitet wird. Mit Hilfe des an den Ausgang weitergeleiteten Anforderungssignals wird der Zugriff auf die Ressourcen zugeteilt.

Der wesentliche Vorteil der erfindungsgemäßen Zuteileinrichtung besteht darin, dass für die Steuerung des Zugriffs nur noch jeweils eine Informationstiefe von 1 Bit aufweisende Anforderungssignale verarbeitet werden müssen, wodurch eine Minimierung des schaltungstechnischen Aufwands - z.B. Verkleinerung der erforderlichen Chipfläche - zur Realisierung der kombinatorischen Logik der Zuteileinrichtung erreicht wird. Durch die Minimierung des schaltungstechnischen Aufwands wird gleichzeitig eine Steigerung der Verarbeitungsgeschwindigkeit erreicht.

Vorteilhaft sind der Zuteileinrichtung weitere mit den Ausgängen verbundene Codierungsmittel zugeordnet, durch welche in Abhängigkeit von dem an einem der Ausgänge anliegenden Anforderungssignale eine die den aktuellen Zugriff zugeteilte Einheit eindeutig identifizierende Identifizierungsinformation gebildet wird - Anspruch 2. Neben der Ausgestaltung der Identifizierungsinformation als ONE-HOT- oder als ZERO-HOT-Vektor - welche durch schaltungstechnische Anordnungen besonders einfach weiterverarbeitet werden können - kann die Identifizierungsinformation auch als einen reduzierten Datenumfang aufweisende und in aktuellen Übertragungsverfahren - wie beispielsweise Bus- oder Kommunikationsnetz-Übertragungsverfahren eingesetzte Adressinformation ausgestaltet sein.

Vorteilhaft sind die Codierungsmittel derart ausgestaltet, dass die Identifizierungsinformationen gemäß der Binär-- oder der Gray-Codierung ausgestaltet ist - Anspruch 4. Derartig codierte Informationen können beispielsweise in FPGA's (Field Programmable Gate Arrays) besonders effektiv umgesetzt werden.

Gemäß einer vorteilhaften Weiterbildung sind in der Zuteileinrichtung den Selektoren zugeordnete Speichermittel vorgesehen, in welcher eine Zugriffsinformation speicherbar ist, durch welche diejenige Einheit identifiziert ist, welcher zuletzt während des abgelaufenen Zeitraums der Zugriff auf die Ressourcen zugeteilt worden ist. Die Zuteileinrichtung und die Speichermittel und die Selektoren sind derart ausgestaltet, dass derjenigen Einheit, welcher zuletzt während des abgelaufenen Zeitraums der Zugriff auf die Ressourcen zugeteilt worden ist, anschließend die niedrigste Priorität zugewiesen wird - Anspruch 6. Durch diese vorteilhafte Ausgestaltung können beispielsweise Round-Robbin-Scheduler realisiert werden. Round-Robbin-Scheduler haben die vorteilhafte Eigenschaft, dass die Staffelung der Prioritäten der an den Scheduler angeschlossenen Einheiten bzw. Instanzen ständig umläuft, d.h. jede Instanz erhält in regelmäßigen Zeitabständen für einen vorgebbaren Zeitraum die höchste Priorität.

Gemäß einer weiteren vorteilhaften Ausgestaltung sind den Selektoren weitere zeitliche Verzögerungsmittel zugeordnet, durch welche das Anforderungssignal derjenigen Einheit, welcher zuletzt während des abgelaufenen Zeitraums der Zugriff auf die Ressourcen zugeteilt worden ist, anschließend für einen vorgebbaren Zeitraum nicht an den entsprechenden Selektor weitergeleitet wird - Anspruch 7. Diese vorteilhafte Ausgestaltung können zeitliche Abhängigkeiten wirksam gemacht werden, wobei die Zugriffsanforderungen einer Instanz nach einer erfolgten Zuteilung des Zugriffs auf die Ressourcen für eine bestimmte Zeit blockiert und erst dann wieder freigegeben werden. Die Steuerung kann beispielsweise über einen Zeitgeber erfolgen. Durch das temporäre Blockieren der Zugriffsanforderung werden Zugriffsanforderungen auf bestimmte Datenübertragungsraten - z.B. Peak-Cell-Rate bei ATM-Kommunikationsnetzen - begrenzt und somit eine Gewichtung der einzelnen Instanzen untereinander ermöglicht.

Weitere vorteilhafte Ausgestaltungen der erfindungsgemäßen Zuteilungseinrichtung sind den weiteren Ansprüchen zu entnehmen.

Im folgenden wird das erfindungsgemäße Verfahren anhand mehrerer Zeichnungen näher erläutert.

Dabei zeigen:

FIG 1      in einem Blockschaltbild die prinzipielle bzw. logische Grundstruktur des erfindungsgemäßen Schedulers mit Zuteilung nach absoluten Prioritäten,

FIG 2      eine Erweiterung des in FIG 1 dargestellten Schedulers zur Realisierung eines Round-Robin-Zuteilverfahrens,

FIG 3      vorteilhafte Ausgestaltung eines Schedulers mit Begrenzung der Zugriffsrate

FIG 4      in einem Blockschaltbild eine beispielhafte schaltungstechnische Ausgestaltung für einen Scheduler mit n+1 Eingängen und mit Zuteilung nach absoluter Priorität,

FIG 5      eine schaltungstechnische Ausgestaltungsvariante zur Realisierung eines Round-Robin-Scheduler mit Ringstruktur,

FIG 6      in einem Ablaufdiagramm ein Verfahren zur Anfangs-Initialisierung und zur Korrektur von Informationen, welche in einem bei Round-Robin-Schedulern eingesetzten Zuteilungsspeicher gespeichert sind,

FIG 7      eine schaltungstechnische Ausgestaltungsvariante zur Realisierung eines Round-Robin-Scheduler mit erweiterter Kette,

FIG 8      eine modifizierte Ausgestaltungsvariante des in FIG 7 dargestellten Round-Robin-Schedulers,

FIG 9      eine schaltungstechnische Ausgestaltungsvariante zur Realisierung eines Round-Robin-Schedulers mit Doppelkette.

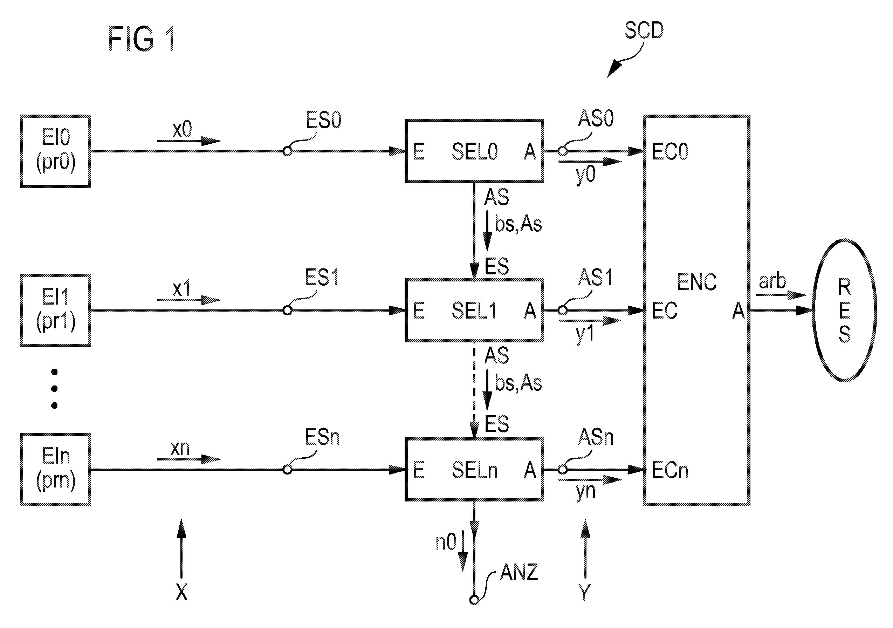

FIG 1 zeigt in einem Blockschaltbild die prinzipielle bzw. logische Grundstruktur des erfindungsgemäßen Schedulers, bestehend aus mehreren kettenförmig miteinander verschalteten Freigabe-/Blockierungseinrichtungen- im Folgendem auch als Selektoren SEL0...n bezeichnet. Die Verschaltung der Selektoren SEL...n wird auch als Selektorenkette bezeichnet. In diesem Ausführungsbeispiel wird durch den Scheduler SCD der Zugriff von mehreren Instanzen bzw. Einrichtungen EI0...n - beispielsweise Warteschlangen in welchen zu übertragende Informationen gespeichert sind - auf von diesen gemeinsam genutzte Ressourcen RES - beispielsweise Übertragungsressourcen eines ATM-Kommunikationsnetzes oder eines Bussystems - geregelt.

Jeder der Selektoren SEL0...n weist einen Eingang E auf, an welchem jeweils eine der Einrichtungen EI0...n über einen Eingang ES0...n des Schedulers SCD und über eine Verbindungsleitung angeschlossen ist. Wird durch eine Einrichtung RI0...n der Zugriff auf die Ressourcen RES angefordert, wird durch die Einheit EI0...n ein die Zugriffsanforderung repräsentierendes Anforderungssignal x0...n erzeugt, welches an den Eingang E des jeweiligen Selektors SEL0...n herangeführt wird. Die Selektoren SEL0...n weisen jeweils einen Ausgang A auf, welcher über einen Ausgang AS0...n des Schedulers SCD und eine Verbindungsleitung an einen Eingang EC0...n eines Encoders ENC angeschlossen ist. Der Encoder kann auch Bestandteil des Schedulers SCD sein.

Des Weiteren ist jeder Selektor SEL0...n über einen Steuerausgang AS mit den jeweiligen Steuereingang ES des nachgeschalteten Selektors SEL1...n verbunden. Der das letzte Element der Selektorenkette repräsentierende Selektor SELn ist über den Steuerausgang AS mit einem separaten Ausgang ANZ des Schedulers SCD verbunden. Der über die Eingänge EC0...n an die Ausgänge AS0...n des Schedulers SCD angeschlossene Encoder ENC weist einen Ausgang A auf, welcher gleichzeitig einen den Zugriff auf die Ressourcen steuernden Ausgang repräsentiert.

Jeder Selektor SEL1...n kann gemäß einer nicht dargestellten vorteilhaften Weiterbildung über einen zusätzlichen Eingang mit einem Aktivierungs-/Deaktivierungssignal beschaltet werden, welches dann mit dem jeweiligen Anforderungssignal x0...n kombinatorisch verknüpft wird - z.B. mittels UND-Verknüpfung. Mit Hilfe des Aktivierungs-/Deaktivierungssignals können einzelne Einheiten EI0...n für einen bestimmten Zeitraum gänzlich aus dem Zuteilverfahren ausgeblendet werden.

Die einzelnen Einheiten bzw. Instanzen EI0...n weisen jeweils unterschiedliche Prioritäten pr0...n auf, wobei die erste Instanz EI1, welche mit dem das erste Element der Selektorenkette repräsentierenden Selektor SEL1 verbunden ist, die höchste Priorität pr0 und die letzte Einheit bzw. Instanz EIn, welche mit dem das letzte Element der Selektorenkette repräsentierenden Selektor SELn verbunden ist, die niedrigste Priorität prn aufweist.

Um eine Zuteilung nach absoluten Prioritäten zu erzielen, wird die Kettenstruktur der Selektoren SEL0...n benutzt. Hierbei sind die einzelnen Selektoren SEL0...n über die jeweiligen Steueraus- bzw. Steuereingänge AS, ES derart miteinander verschaltet, dass bei einem von einer Einheit bzw. Instanz - z.B. der ersten Einheit EI0 - erzeugten Anforderungssignal x0 durch den dieser ersten Instanz EI0 zugeordneten Selektor SEL0 ein Blockierungssignal bs erzeugt wird, welches an den Steuereingang ES des zweiten Selektors SEL1 weitergeleitet wird. Bei Anliegen eines Blockierungssignals bs am Steuereingang ES des zweiten Selektors SEL1 wird durch diesen ebenfalls ein Blockierungssignal bs erzeugt, welches an den nächsten Selektor SEL2 weitergeleitet wird, d.h. das Blockierungssignal bs wird an alle nachfolgenden Elemente bzw. Selektoren der Selektorenkette weitergeleitet. Ein Anforderungssignal x1... n von einer Einheit EI1...n mit niedriger Priorität pr1...n kann sich somit nur dann durchsetzen, bzw. wird nur dann von dem jeweiligen Selektor SEL0...n als Ausgangssignal y0...n an den entsprechenden Ausgang AS0...n des Schedulers SCD weitergeleitet, wenn kein Anforderungssignal x0 von einer Einheit EI0 mit höherer Priorität pr0 vorliegt, d.h. alle von Einheiten EI1...n mit niedrigerer Priorität pr erzeugten Anforderungssignale x1...n werden von dem Anforderungssignal x0 derjenigen Einheit EI0 mit der höchsten Priorität pr0 blockiert. Das nicht blockierte Anforderungssignal x0 wird über einen Ausgang A des jeweiligen Selektors SEL1...n als Eingangssignal y0 an den entsprechenden Eingang EC0 des Encoders ENC weitergeleitet.

Wenn von keiner Instanz E1...n der Zugriff auf die Ressourcen RES angefordert wird, wird durch den das letzte Element der Selektorenkette repräsentierenden Selektor SELn ein entsprechendes Signal no erzeugt, welches an den Ausgang ANZ des Schedulers SCD weitergeleitet wird.

Der in FIG 1 prinzipiell dargestellte Scheduler SCD kann beispielsweise mit Hilfe eines FPGA (Field Programmable Gate Array) realisiert werden. Bei Verwendung eines FPGA kann die Selektorenkette vorteilhaft durch geeignete Verschaltung der bereits in FPGAs vorinstallierten Multiplexer (Carry-Kette) gebildet werden.

Die Zugriffsanforderungen der jeweiligen Instanzen EI1...n, d.h. die diese repräsentierenden Anforderungssignale x0...n können als Eingangsvektor X aufgefasst werden mit welchem die Eingänge ES0...n des Schedulers SCD beschaltet werden. Durch den Scheduler SCD wird in beschriebener Art und Weise ein die Ausgangssignale y0... n repräsentierender Ausgangsvektor Y erzeugt, welcher vorteilhaft als One-Hot- oder Zero-Hot-Vektor ausgestaltet ist. Der erzeugte Ausgangsvektor Y wird durch den nachgeschalteten Encoder ENC in den gewünschten Instanzen-Code arb umcodiert wird - beispielsweise gemäß einer Binär- oder Gray-Codierung - . Diese Art der Codierung kann in FPGA's besonders effektiv umgesetzt werden.

Die Realisierung der Selektorenkette mit Hilfe einer Carry-Kette ist erreichbar, indem spezielle Multiplexer (in XILINX-Virtex FPGA's werden derartige Multiplexer als MUXCY bezeichnet) in HDL-Code instanziiert werden. Die Verwendung der Carry-Ketten wird also durch gezielte strukturelle Beschreibung (Instanziierung) anstelle der üblichen Verhaltensbeschreibung erreicht. Durch die Verwendung der in FPGA's vorgefertigten Carry-Strukturen für die priorisierte Verarbeitung von annähernd gleichzeitig gestellten Zugriffsanforderungen wird der Schaltungsaufwand, d.h. die erforderliche Fläche auf dem Chip minimiert, wobei gleichzeitig eine erhöhte Arbeitsgeschwindigkeit erreicht wird.

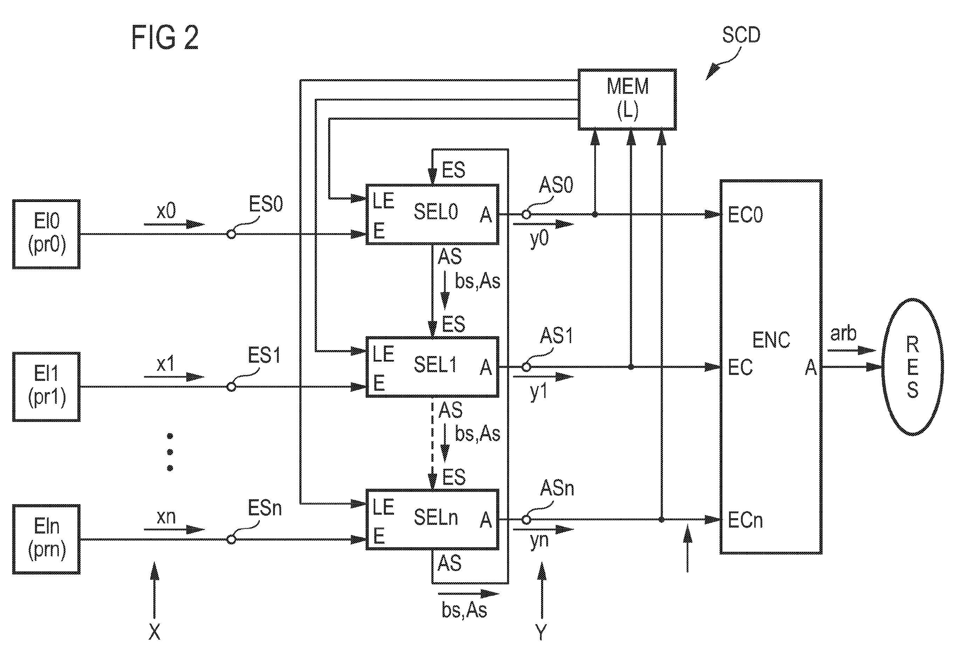

FIG 2 zeigt in einem Blockschaltbild eine Erweiterung der in FIG 1 dargestellten Schaltungsanordnung, wobei durch eine Rückkopplung der an den Ausgängen A der Selektoren SEL0...n anliegenden Ausgangssignale y0...n über einen Zuweisungsspeicher MEM an weitere Eingänge EL der Selektoren SEL0...n ein Round-Robin-Scheduler realisiert ist, wobei die Schaltungsanordnung derart ausgestaltet ist, dass eine flexible Reihenfolge der Prioritäten der einzelnen Instanzen bzw. Einheiten EI0...n untereinander definiert ist. Im Gegensatz zu FIG 1 sind die Selektoren SEL0...n ringförmig verkettet, d.h. der Steuerausgang AS des das letzte Element der Selektorenkette repräsentierenden Selektors SELn ist an den Steuereingang ES des das erste Element der Selektorenkette repräsentierenden Selektors SEL0 angeschlossen bzw. rückgekoppelt.

Nach einer erfolgten Zuteilung der Prioritäten pr0...n zu den jeweiligen Einheiten EI0...n durch den Zuteilungsspeicher MEM wird diejenige Einheit bzw. Instanz EI0...n mit der höchsten Priorität pr0...n bestimmt. In Abhängigkeit von der ermittelten Instanz EI0...n mit der höchsten Priorität pr0...n und deren lokalen Zuordnung zu dem jeweiligen Selektor SEL0...n als Bestandteil der Selektorenkette ergeben sich die Prioritäten pr0...n der restlichen Instanzen EI0...n. Der Zuteilungsspeicher ist derart ausgestaltet, dass diejenige Instanz, welche zuletzt den Zugriff auf die Ressourcen RES inne hatte, anschließend die niedrigste Priorität pr0...n aufweist. Diese Instanz EI0...n erhält erst dann erst wieder eine Zuteilung auf die Ressourcen RES, wenn keine andere Instanz eine Anforderung stellt oder alle anderen Instanzen EI0...n eine Zuteilung auf die Ressourcen erhalten haben.

Zur Realisierung des flexiblen Umlauf der Prioritäten pr0...n wird ein Vektor L im Zuweisungsspeicher MEM gespeichert, welcher aus dem an den Ausgängen A der Selektoren SEL0...n anliegenden Ausgangsvektors V abgeleitet wird und welcher die zuletzt aktive Instanz EI0...n kennzeichnet. Dadurch wird eine ständig umlaufende Staffelung der Prioritäten der jeweiligen Einheiten EI0...n erreicht. Die durch den Vektor L dargestellte Information, welche die während des aktuell abgelaufenen Zeitraums aktive Instanz EI0...n kennzeichnet, wird anschließend im ein Bit verschoben an die Eingänge LE der Selektoren SEL0...n zurückgekoppelt. Der Vektor L ist ebenfalls als One-Hot- oder Zero-Hot-Vektor ausgestaltet.

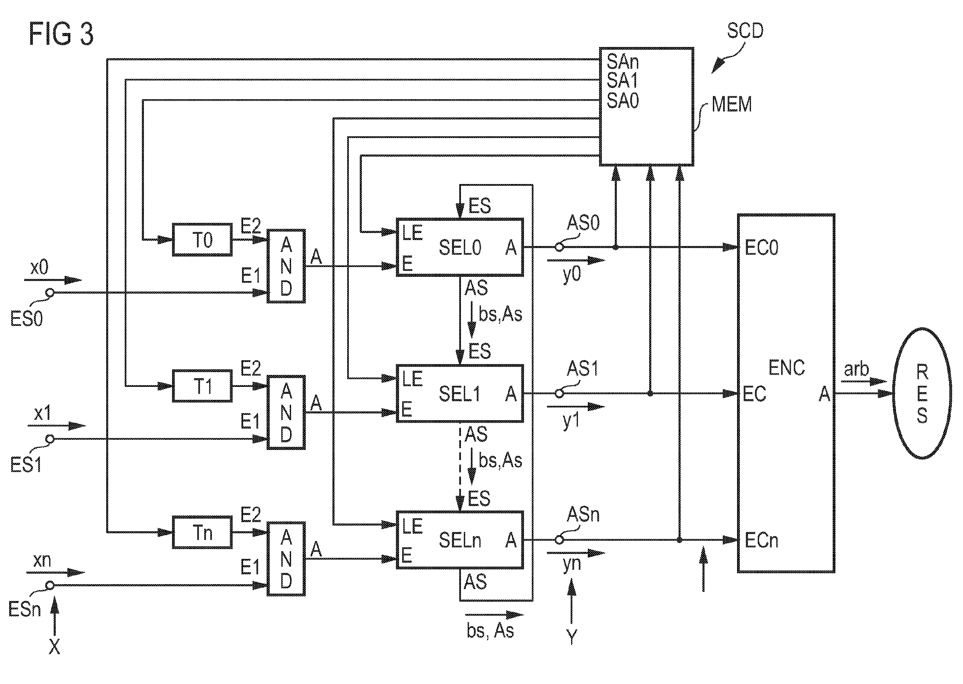

FIG 3 zeigt in einem Blockschaltbild eine weitere Modifikation des in FIG 2 dargestellten Rückkopplungsnetzwerkes, durch welche ein Scheduler mit Begrenzung der Zugriffsrate realisiert wird. Bei dieser Ausgestaltungsvariante ist das von jeder Instanz EI1...n erzeugte Anforderungssignal x0...n an einen ersten Eingang E1 eines UND-Gatters AND geführt, dessen Ausgang A mit dem Eingang E des jeweiligen Selektors SEL1...n verbunden ist. Die UND-Gatter AND weisen jeweils einen zweiten Eingang E2 auf, welche jeweils über ein Zeitverzögerungsglied T0...n mit einem Steuerausgang SA0...n des Speichers MEM verbunden sind. Durch die Zeitverzögerungsglieder T0...n werden Anforderungssignale x0...n von denjenigen Instanzen EI0...n für eine vorgebbare Zeitperiode blockiert, welche zuvor den Zugriff auf die Ressourcen erteilt bekommen haben. Erst nach Ablauf der Zeitperiode werden die entsprechenden Anforderungssignale x0...n wieder an die Selektoren SEL0...n weitergeleitet. Die Steuerung kann beispielsweise über einen Zeitgeber erfolgen. Mit Hilfe dieser Ausgestaltungsvariante können zeitliche Abhängigkeiten wirksam gemacht werden, z.B. um Zugriffsanforderungen auf bestimmte Übertragungsraten (z.B. Peak-Cell-Rate) zu begrenzen, wodurch eine zusätzliche Gewichtung der einzelnen Instanzen EI1...n untereinander erreicht wird.

Es ist anzumerken, dass eine beliebige Kombination der in FIG 1 bis 3 dargestellten logischen Grundstrukturen von Schedulern und Subschedulern möglich ist, die eine Zuteilung des Zugriffs auf gemeinsam genutzte Ressourcen nach absoluten Prioritäten bzw. mit gleichmäßiger oder gewichteter Verteilung ermöglichen.

Im folgenden werden mehrere schaltungstechnische Ausgestaltungsvarianten der in den FIG 1 bis 3 prinzipiell dargestellten Scheduler-Varianten beschrieben.

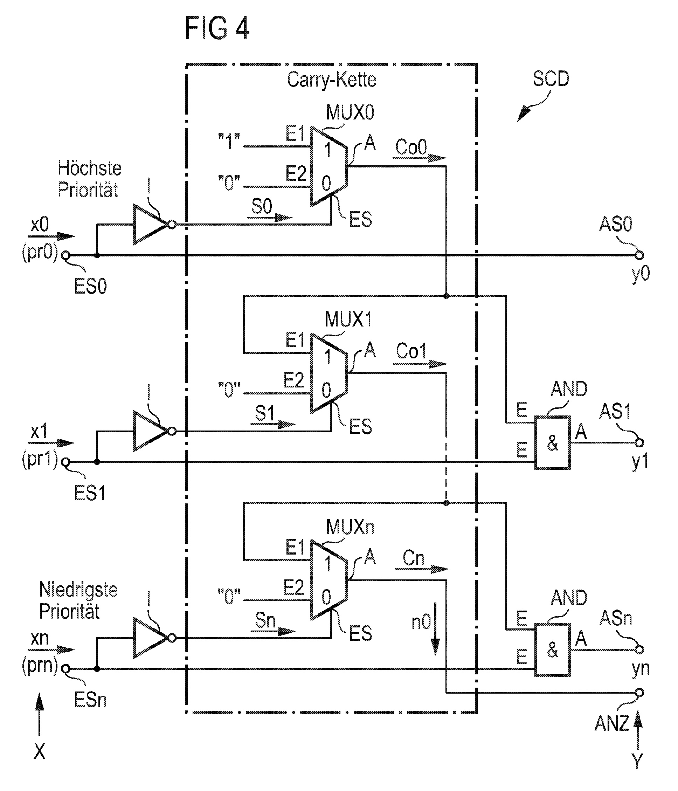

FIG 4 zeigt in einem Blockschaltbild eine beispielhafte schaltungstechnische Ausgestaltung für einen Scheduler SCD mit n+1 Eingängen ES0...n und absoluter Priorität. An die Eingänge ES0...n des Schedulers SCD werden die von den Einheiten bzw. Instanzen - nicht dargestellt - erzeugten Anforderungssignale als Vektorsignal X bzw. x0...n herangeführt, wobei das erste Anforderungssignal x0 die höchste Priorität pr0 und das letzte Anforderungssignal xn des Vektorsignals X die niedrigste Priorität prn aufweist. Das am ersten Eingang ES0 anliegende Anforderungssignal x0 wird unverändert an einen ersten Ausgang AS0 der Zuteileinrichtung SCD als Ausgangssignal y0 weitergeleitet. Gleichzeitig wird das am Eingang ES0 Anforderungssignal x0 über einen Inverter I als Steuersignal s0 an einen Steuereingang ES eines ersten Multiplexers MUX0 herangeführt. An einen ersten Eingang E1 des ersten Multiplexers MUX0 ist ein, die Freigabe repräsentierendes Eingangssignal cl0 - in FIG 4 als "activ high" bzw. mit logisch "1" gekennzeichnet - herangeführt. An einen zweiten Eingang E2 des ersten Multiplexers MUX0 ist ein die Blockierung repräsentierendes Eingangssignal dl0 - in FIG 4 als "activ low" bzw. logisch "0" gekennzeichnet - herangeführt.

Das am zweiten Eingang ES1 der Zuteileinrichtung SCD anliegende Anforderungssignal x1 wird an einen ersten Eingang E eines UND-Gatters AND herangeführt. Ein zweiter Eingang E dieses UND-Gatters AND ist über eine Verbindungsleitung mit dem Ausgang A des ersten Multiplexers MUX0 verbunden. Gleichzeitig ist der Ausgang A des ersten Multiplexers MUX0 an einen ersten Eingang E1 eines zweiten Multiplexers MUX1 angeschlossen. Das am Ausgang A des ersten Multiplexers MUX0 anliegende Freigabe-/Blockierungssignal co0 wird an den Eingang E des UND-Gatters AND und an den ersten Eingang E1 des zweiten Multiplexers MUX1 als Eingangssignal cl1 weitergeleitet. An einen zweiten Eingang E2 des zweiten Multiplexers MUX1 wird ein, die Blockierung repräsentierendes Eingangssignal dl1 herangeführt. Das am zweiten Eingang ES1 der Zuteileinrichtung SCD anliegende Anforderungssignal x1 wird über einen Inverter I als Steuersignal s1 an einen Steuereingang ES des zweiten Multiplexers MUX1 weitergeleitet.

Die an den weiteren Eingängen E2...n des Schedulers SCD anliegenden Anforderungssignale x2...n werden schaltungstechnisch in beschriebener Art und Weise behandelt. Abweichend von dieser Schaltungsanordnung ist der Ausgang A des letzten Multiplexers MUXn mit einem separaten Ausgang ANZ der Zuteileinrichtung SCD verbunden, wobei das Ausgangssignal con des letzten Multiplexers MUXn an diesen separaten Ausgang ANZ weitergeleitet wird. Gemäß der in FIG 4 dargestellten Schaltungsanordnung erhält eine Instanz, bzw. eine Einheit EI0...n, dessen Anforderungssignal x(i) an dem entsprechenden Eingang ES(i) der Zuteileinrichtung SCD anliegt, nur dann eine Zuteilung auf die gemeinsam genutzten Ressourcen RES, wenn sie eine Anforderung stellt - d.h. x(i) = "1" - und nicht von einer Instanz bzw. Einheit EI0...i-1 mit einer höheren Priorität pr0...i-1 blockiert wird - d.h. cl(i) = "1". Wenn diese Instanz bzw. Einheit EI(i) selbst eine Anforderung stellt, werden durch dieses Anforderungssignal x(i) alle Anforderungssignale x(i+1...n) von Instanzen EIi+1...n niedriger Priorität blockiert - d.h. co(i) = "0". Wird durch die Instanz EI(i) keine Anforderung an die gemeinsam genutzten Ressourcen RES gestellt - d.h. x(i) = "0" - wird durch den dieser Einheit EI(i) entsprechend zugeordneten Multiplexer MUX(i) das an dessen ersten Eingang E1 anliegende Freigabe-/ Blockierungssignal co(i-1) bzw. cl(i) höher priorisierter Instanzen EI(0...i-1) weitergeleitet - d.h. co(i) = cl(i). Diejenige den Zugriff auf die Ressourcen RES anfordernde Instanz EI0 mit der höchsten Priorität bzw. dessen Anforderungssignal x(0) kann nicht von anderen Instanzen (EI1...n) blockiert werden. Wird von keiner Instanz EI0...n eine Anforderung auf die Ressourcen gestellt - d.h. x0...n = "0" - wird durch den letzten Multiplexer MUXn ein entsprechendes Ausgangssignal con = no = "1" gebildet, welches den separaten Ausgang ANZ der Zuteileinrichtung SCD weitergeleitet wird, ansonsten gilt con = no = "0".

Die in FIG 4 dargestellten Signale haben folgende Bedeutung:

x(i) = 0 keine Anforderung der Instanz I
x(i) = 1 Anforderung der Instanz I
co(i) = 0 Blockierung der Anforderung niedrigerer Priorität
co(i) = 1 Freigabe der Anforderungen niedrigerer Priorität
y(i) = 0 Instanz I erhält keine Zuteilung
y(i) = 1 Instanz I erhält eine Zuteilung
no = 0 eine Instanz erhält eine Zuteilung
no = 1 keine Instanz erhält eine Zuteilung

Es gelten folgende kombinatorische Beziehungen:

| | |
|---|---|
| i > 0 | co(i) =/ x(i) co(i-1) |
| | y(i) = x(i) co(i-1) |
| i = 0 | co(0) =/ x(0) |
| | y(0) = x(0) |

wobei / einer Negation entspricht.

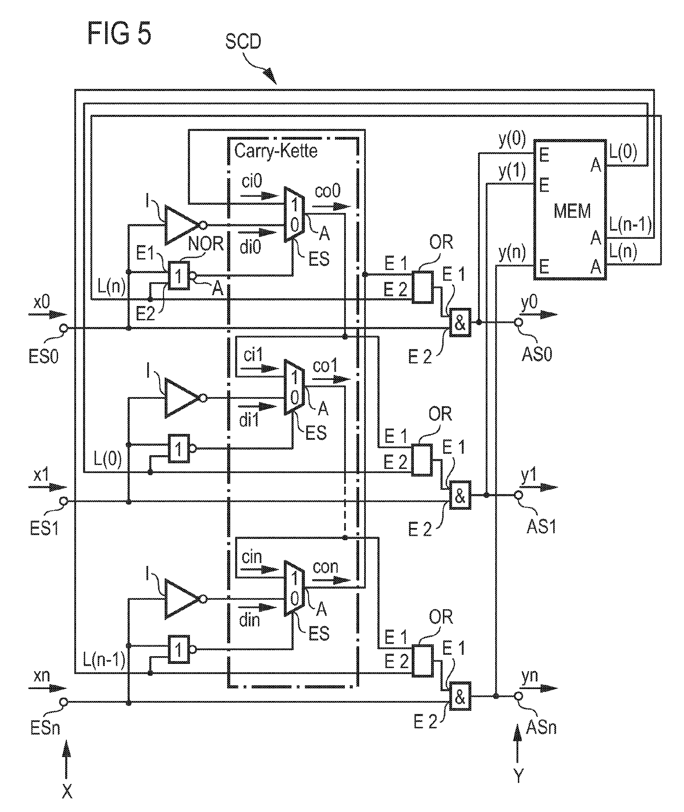

FIG 5 zeigt in einem Blockschaltbild eine beispielhafte schaltungstechnische Ausgestaltungsvariante, für einen in FIG 2 prinzipiell dargestellten Round-Robin-Scheduler, welcher ringförmig für n+1 Instanzen EI0...n aufgebaut ist. Die von den Instanzen bzw. Einheiten EI0...n erzeugten Anforderungssignale x0...n werden an entsprechende Eingänge ES0...n des Schedulers SCD herangeführt. Jeder Eingang ES0...n ist jeweils mit einem ersten Eingang E1 eines NOR-Gatters NOR verbunden. Ein Ausgang A des NOR-Gatters NOR ist jeweils an einen Steuereingang ES eines Multiplexers MUX0...n verbunden. Jeder Eingang ES0...n ist weiterhin jeweils über einen Inverter I mit einem zweiten Eingang E2 des entsprechenden Multiplexers MUX0...n verbunden. Die n+1 Multiplexer MUX0...n sind kettenförmig miteinander verschaltet, d.h. jeder Ausgang A des i-ten Multiplexer MUXi ist mit einem ersten Eingang E1 des in der Kette nachfolgenden Multiplexers MUXi+1 verbunden. Gleichzeitig ist der Ausgang A des i-ten Multiplexer MUXi an einen ersten Eingang E1 eines dem nachfolgenden Multiplexer MUXi+1 zugeordneten ODER-Gatters OR angeschlossen.

Jeder Eingang ES0...n des Schedulers bzw. der Zuteileinrichtung SCD ist über eine Verbindungsleitung mit einem zweiten Eingang E2 eines UND-Gatters AND verbunden welches über einen ersten Eingang E1 an einen Ausgang des ODER-Gatteres OR angeschlossen ist. Der Ausgang A des UND-Gatters AND ist mit einem entsprechenden Eingang E eines Speichers MEM für die Abspeicherung der letzten Zuteilung verbunden. Der Speicher MEM beinhaltet gleichzeitig eine Vorrichtung für eine Start-Initialisierung zur Korrektur.

Der Speicher MEM weist n+1 Ausgänge A auf, wobei jeder Ausgang einem Multiplexer MUX0...n zugeordnet ist. Jeder Ausgang A des Speichers MEM ist mit einem zweiten Eingang E2 des jeweiligen NOR-Gatters NOR verbunden. Gleichzeitig ist der jeweilige Ausgang A des Speichers MEM mit einem zweiten Eingang E2 des jeweiligen ODER-Gatters OR verbunden. Die an den Ausgängen der UND-Gatter AND anliegenden Signale y0...n werden jeweils an entsprechende Ausgänge AS0...n des Round-Robin-Scheduler SCD weitergeleitet. Der Ausgang A des in der Kette zuletzt angeordneten Multiplexers MUXn ist über eine Verbindungsleitung mit dem ersten Eingang E1 des in der Kette als erstes Element angeordneten Multiplexers MUX0 verbunden. Gleichzeitig ist der Ausgang A des letzten Multiplexers MUXn mit dem ersten Eingang E1 des dem ersten Anforderungs-Signal x0 bzw. dem ersten Multiplexer MUX0 zugeordneten ODER-Gatters OR verbunden.

Die in FIG 5 dargestellten Signale x0...n, co0...n und y0...n weisen die gleiche Funktionalität auf, wie bei dem in FIG 4 dargestellten Scheduler mit absoluter Priorität. Im Unterschied zu dem in FIG 4 dargestellten Scheduler wird im Speicher MEM eine Vektor L - bestehend aus den n+1 Einzelsignalen 10...n - gespeichert, mit Hilfe dessen eine Information gespeichert wird, welche diejenige Instanz bzw. Einreichung EI0...n identifiziert, welche zuletzt für den aktuell abgelaufenen Zeitraum den Zugriff auf die gemeinsam genutzten Ressourcen innehatte. Der Speicher MEM ist derart ausgestaltet, dass die zuletzt gespeicherte Zuteilung um 1 Bit verschoben an die entsprechenden Eingänge der NOR- und ODER-Gatter NOR, OR zurückgekoppelt wird. Durch die Art der in FIG 5 dargestellten Verschaltung wird die Priorität derjenigen Instanz EI0...n, welche zuletzt den Zugriff auf die gemeinsamen Ressourcen RES innehatte, im nächsten Schritt auf die niedrigste Stufe gesetzt und somit ein Umlauf der Prioritäten erreicht, durch welchen die Ressourcen gleichmäßig unter allen Anforderungen stellende Instanzen verteilt werden.

Der Vektor L bzw. die an den Ausgängen A des Speichers MEM anliegenden Signale 10...n weisen folgende funktionale Eigenschaft auf:

L(i) = 1 Instanz mit der höchsten Priorität
L(i) = 0 Instanz mit der niedrigsten Priorität

Wenn alle an den Ausgängen AS0...n des Schedulers SCD herangeführten Ausgangssignale y0...n den logischen Wert "0" aufweisen - d.h. für den aktuellen Zeitraum erfolgt keine Zuteilung auf die Ressourcen RES - muss der Speicher MEM derart ausgestaltet sein, dass der gespeicherte Vektor L seinen Wert beibehält. Der Speicher MEM muss nach der Anfangsinitialisierung der Schaltung mit einem beliebigen Initialisierungswert - beispielsweise einem beliebigen ONE-HOT-Vektor - initialisiert werden, wobei der Speicher MEM gleichzeitig mit einem Korrekturnetzwerk kombiniert werden sollte. Mit Hilfe des Korrekturnetzwerks kann ein Fehlkonstellation festgestellt werden, wenn z.B. der Ausgangsvektor Y weder ein ONE-HOT-Vektor noch ein NULL-Vektor ist. In diesem Fall liegt eine Störung vor, deren Auswirkung begrenzt werden kann indem ein beliebiger ONE-HOT-Vektor für L eingesetzt wird. Bei fehlender Korrekturmöglichkeit könnten im darauffolgenden Verarbeitungsschritt mehrere Bits des Ausgangsvektors Y gleichzeitig gesetzt werden, was einer unzulässigen Zuteilung des Zugriffs gleichzeitig auf mehrere Instanzen entspricht.

Für die Logik der in FIG 5 dargestellten, kettenförmig miteinander verbundenen Multiplexer MUX0...n - auch als "Carry-Kette" bezeichnet- ergeben sich gemäß der nachfolgend dargestellten Tabelle für die jeweils ein- und ausgehenden Signale x0...n, y0...n, ci0...n, co0...n bzw. für die entsprechenden Vektoren X, Y, L, CO, CI folgende kombinatorischen Beziehungen:

| für i=0 | $CO(0) = /X(0) (CO(n) ? L (n) )$ |
| | $Y(0) = X(0) (CO(n) ? L(n) )$ |
| für i>0 | $CO(i) = /X(i) (CO(i-1) ? L(i-1))$ |
| | $Y(i) = X(i) (CO(i-1) ? L(i-1))$ |

wobei

v -> ODER-Verknüpfung

| Priorität | Eingänge | | | Ausgänge | | Erklärung |
|---|---|---|---|---|---|---|
| | L | X | CI | CO | Y | |
| Element mit höchster Priorität | 1 | 1 | X | 0 | 1 | Anforderung, Instanz ausgewählt, Blockierung nach unten |
| | 1 | 0 | X | 1 | 0 | keine Anforderung, Instanz nicht ausgewählt, Freigabe nach unten |
| Element mit niedrigerer Priorität | 0 | X | 0 | 0 | 0 | Blockierung von oben, Instanz nicht ausgewählt, Blockierung von unten |
| | 0 | 0 | 1 | 1 | 0 | keine Anforderung und keine Blockierung von oben, Instanz nicht ausgewählt, Freigabe nach unten |
| | 0 | 1 | 1 | 0 | 1 | Anforderung und keine Blockierung von oben, Instanz ausgewählt, Blockierung nach unten |

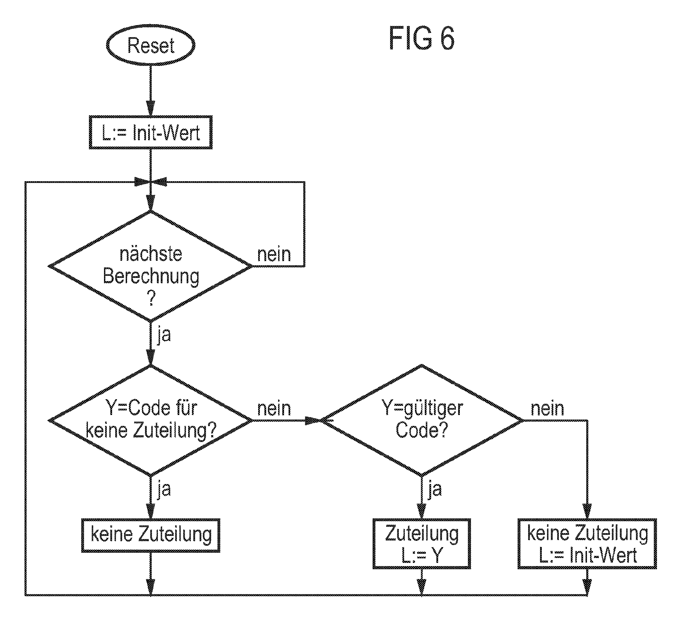

Wie bereits erläutert sollte der Speicher MEM, in welchem die Zuteilung für den Zugriff auf die Ressourcen während des aktuell abgelaufenen Zeitraums gespeichert ist, bei der Anfangsinitialisierung mit einem gültigen Code - z.B. One-Hot-Vektor - initialisiert werden. Nach jeder Neuzuteilung des Zugriffs wird geprüft, ob eine Zuteilung erfolgt ist. Wenn keine Zuteilung erfolgt - wenn z.B. der Ausgangsvektor Y = "0" - bleibt der aktuell im Speicher MEM gespeicherte Vektor L erhalten. Liegt ein gültiger Code vor - z.B. der Ausgangsvektor Y ist ein One-Hot-Vektor - wird dieser Vektor Y im Speicher MEM gespeichert; ansonsten wird der Speicher MEM mit dem Initialisierungswert geladen. Der Ablauf der Initialisierung und der Korrektur des im Speicher MEM gespeicherten Vektors L ist in Figur 6 mit Hilfe eines Ablaufdiagramms nochmals selbsterläuternd dargestellt.

Die in FIG 5 dargestellte ringförmige Verkettung von Multiplexern MUX0...n hat den Nachteil, dass die jeweiligen Ausgänge A der Multiplexer MUX0...n zur Blockierung bzw. zur Freigabe zurückgekoppelt werden. Damit entsteht eine kombinatorische Schleife. Bedingt durch diese kombinatorische Schleife sind Programme zur statischen Timing-Analyse nicht in der Lage, die Laufzeit aller Pfade dieser Kombinatorik zu berechnen, da diese keine Informationen zur Funktion der Schaltung berücksichtigen. Somit ergibt sich nachteilig eine Einschränkung bei der Verifikation der Schaltung. Die Kette ist jedoch aus funktioneller Sicht immer an einer Stelle aufgetrennt - nämlich genau dann, wenn L = "1", wird das jeweils am ersten Eingang E1 des entsprechenden Multiplexer MUX(i) anliegende Signal cl(i)0...n ignoriert. Die Verifikation muss demnach durch die aufwendigere Timing-Simulation aller Pfade der kettenförmig verschalteten Multiplexer MUX0...n "Carry-Kette" erbracht werden.

Ein weiterer Nachteil ergibt sich aus der Topologie der FPGA-Strukturen. Die Carry-Ketten in FPGA's werden durch die Implementierungswerkzeuge so verlegt, dass sie durch in Spalten angeordnete CLB's (Configurable Logic Blocks) verlaufen. In diesem Fall sind optimale Verbindungen zwischen den Ausgängen A des Multiplexer MUX(i) und den ersten Eingängen E1 der nachfolgenden Multiplexer MUX(i+1) erreichbar. Für die Rückkoppelung - d.h. die Rückkoppelung des Ausgangs A des letzten Multiplexers MUXn an den ersten Eingang E1 des ersten Multiplexers MUX0 - ist dies aber nicht möglich; hier muss ein langsamerer Pfad eingefügt werden, der Geschwindigkeitseinbußen mit sich bringt.

Die nachfolgend dargestellten schaltungstechnischen Anordnungsvarianten weisen die genannten Nachteile nicht auf.

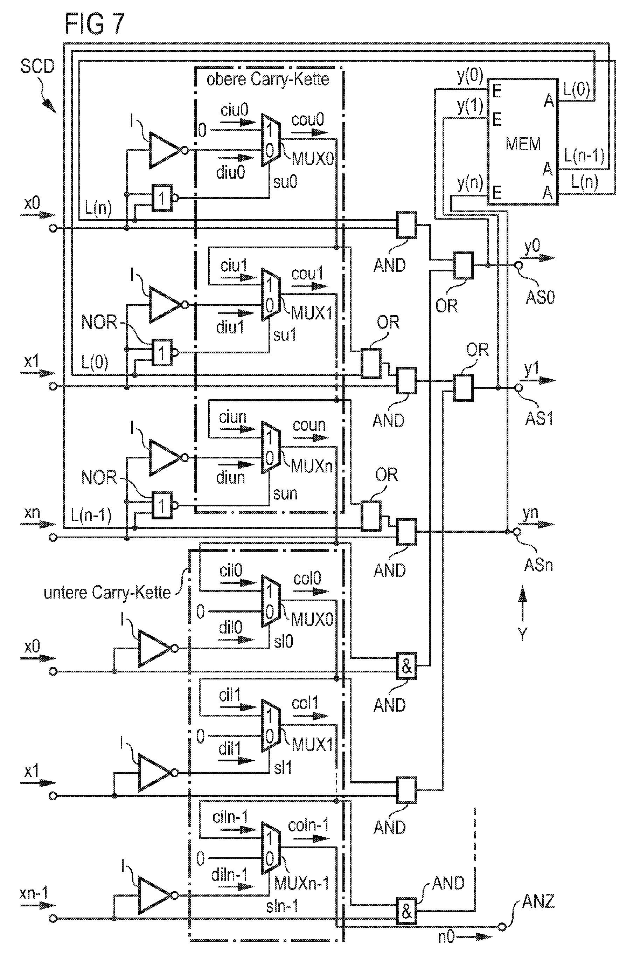

FIG 7 zeigt in einem Blockschaltbild eine weitere schaltungstechnische Ausgestaltungsvariante eines Round-Robin-Scheduler mit erweiterter Kette. Um den bereits genannten Nachteil der kombinatorischen Schleife zu umgehen, wird eine erweiterte Kette gebildet, die aus zwei Teilketten besteht -in Figur 7 mit "oberer Carry-Kette" und "untere Carry-Kette" bezeichnet. Der obere Teil der Kette ist wie die Ringstruktur gemäß FIG 5 aufgebaut, abweichend davon wird das am Ausgang A des letzten Multiplexers MUXn anliegende Ausgangssignal coun nicht an den ersten Eingang E1 des ersten Multiplexers MUX0 zurückgekoppelt. Anstelle der Rückkopplung wird an den ersten Eingang E1 des ersten Multiplexers MUX0 ein festes Blockierungssignal ciu0 mit dem logischen Wert ciu = "1" eingespeist. Ist nun das oberste Glied oberen Carry-Kette, d.h. der erste Multiplexer MUX0, das Element mit der höchsten Priorität pr0, so wird dieses Blockierungssignal ciu0 ignoriert und die obere Carry-Kette verhält sich wie im Ring gemäß FIG 5.

Liegt das Element bzw. der Multiplexer MUX(i) mit der höchsten Priorität pr(i) aber weiter unten in der Kette, werden alle darüberliegenden Multiplexer MUX0...i-1 bzw. die daran anliegenden Anforderungssignale x0...i-1 durch die Einspeisung der Blockierung von oben blockiert. Die Instanzen, die diesen Multiplexern zugeordnet sind, könnten somit nicht mehr dem Zugriff auf die Ressourcen RES anfordern. Einen Ausweg bietet die in FIG 7 dargestellte untere Carry Kette die dann wirksam wird, wenn keines der restlichen noch wirksamen Anforderungssignale x0...n der oberen Carry-Kette eine Anforderung stellt. Da im Extremfall nur noch das unterste Element der oberen Kette mit der Länge n+1 wirksam ist, muss die untere Kette die Länge n haben. Sie hat eine Prioritätsstruktur wie des Kette des Scheduler mit absoluten Prioritäten - vergleiche FIG 4 -, d.h. die Elemente der unteren Kette haben immer eine niedrigere Priorität als mindestens ein Element der oberen Kette. Deshalb muss keine Verknüpfung mit dem an den Ausgängen A des Speichers MEM anliegenden Vektorsignals L hergestellt werden. Das Ergebnis beider Ketten wird mit Hilfe von ODER-Gattern OR logisch verknüpft, an deren Ausgängen A der ermittelte Ausgangsvektor Y bzw. die entsprechenden Ausgangssignale y0...n anliegen. Wenn von keiner Instanz ein Anforderungssignal x0...n an die obere bzw. untere Carry-Kette übermittelt wird, wird ein entsprechendes Ausgangssignal col(n-1) an den Ausgang ANZ des Schedulers SCD weitergeleitet.

Die Logik gemäß FIG 7 kann weiter modifiziert werden. Da für die obere Kette nie gleichzeitig L(i) = "1" und clu(i) = "1" für ein Element der Kette bzw. für den Multiplexer MUX(i) gilt, kann die Gleichung für die an den Ausgängen A der Multiplexer MUX0...n anliegenden Ausgangssignale cou0...n ausgehend von der oben aufgeführten Tabelle folgendermaßen umgeformt werden:

$$i > 0:$$

$$COU(i) = L(i-1) \& (L(i-1) \oplus X(i)) \vee CIU(i) \& /(L(i-1) \oplus X(i))$$

$$i = 0:$$

$$COU(0) = L(n) \& (L(n) \oplus X(0)) \vee CIU(0) \& /(L(n) \oplus x(0))$$

mit CIU(0) = 0
wobei
& -> UND-Verknüpfung
$\oplus \rightarrow$ EXOR-Verknüpfung

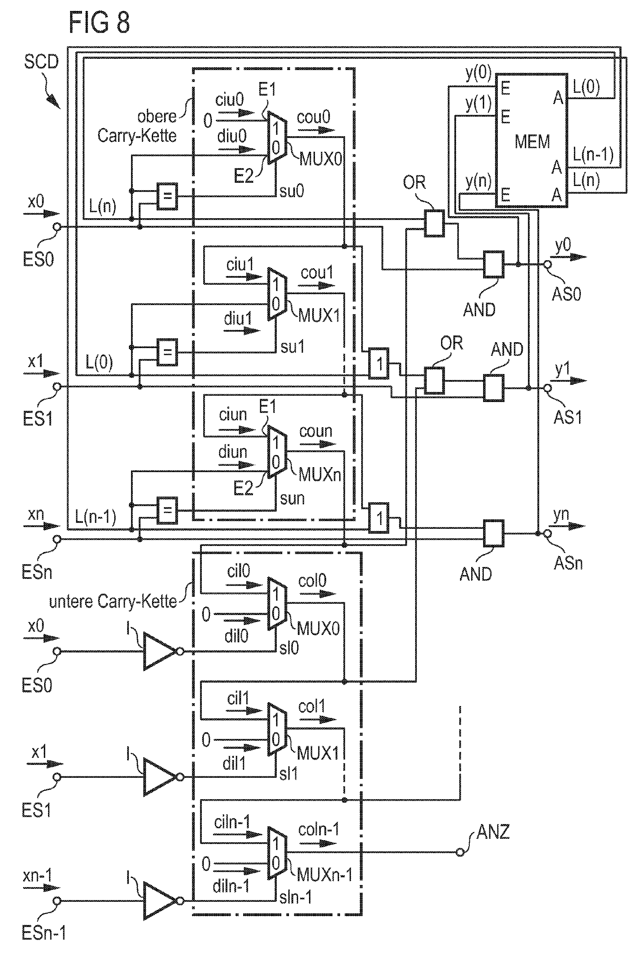

Als weitere Modifikation der in FIG 7 dargestellten Schaltungsanordnung kann die UND-Verknüpfung der Eingangssignale x0...n, die sowohl in der oberen als auch in der unteren Kette notwendig ist, hinter die mittels ODER-Gatter OR realisierte ODER-Verknüpfung verschoben werden. Die schaltungstechnische Ausgestaltung der oben beschriebenen kombinatorischen Verknüpfung und der Verschiebung der UND-Verknüpfung der Eingangssignale X0...n hinter die ODER-Verknüpfung ist in FIG 8 dargestellt. Bei dieser Ausgestaltungsvariante entsteht eine sehr lange Kette bzw. Carry-Kette, die aber keine kombinatorische Schleife aufweist. Trotz der Länge kann so eine in einer CLB-Spalte angeordnete Carry-Kette schneller sein als ein Ring. Ein Nachteil entsteht jedoch dann, wenn die Carry-Kette eine Länge aufweist, welche nicht mehr auf den ausgewählten Chip untergebracht werden kann.

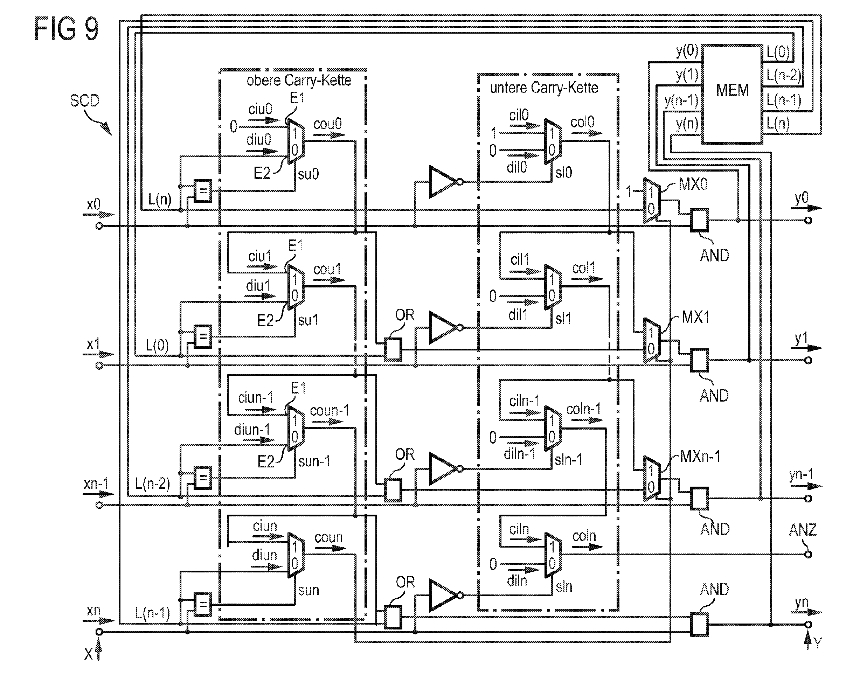

In FIG 9 ist in einem Blockschaltbild ein weitere schaltungstechnische Ausgestaltungsvariante eines Round-Robin-Schedulers mit einer Doppelkette von Multiplexern dargestellt. Die obere Kette - in FIG 9 mit "obere Carry-Kette" bezeichnetist in der gleichen Art und Weise aufgebaut, wie bei dem in FIG 7 dargestellten Scheduler mit erweiterter Kette. An einem ersten Eingang E1 des ersten Multiplexers MUX0 der oberen Carry-Kette wird eine Blockierung eingespeist, d.h. ciu(0) = "0", wobei je nach Lage des Multiplexers MUX(i) mit der höchsten Priorität - d.h. L(i) = "1" - mehr oder weniger Glieder der Kette wirksam werden. Maximal werden alle Elemente der Kette blockiert, wenn L(0) = "1". Minimal wird ein Element der Kette blockiert, wenn L(n) = "1". Wenn ein Anforderungssignal x(i) an einen nicht blockierten Multiplexer MUX(i) herangeführt ist, ist das zugehörige Ausgangssignal des Multiplexers MUX(n) cou(i) = "0". Wenn jedoch cou(i) = "1" könnte eine Anforderung an einen nicht blockierten Teil der Kette gestellt worden sein. Deshalb ist die untere Kette angeordnet, die so beschaffen ist, dass das erste Element der unteren Carry-Kette immer eine Freigabe erhält, d.h. cil(0) = "1". Die untere Carry-Kette ist so aufgebaut, wie die untere Kette des in FIG 7 dargestellten Schedulers mit erweiterter Kette. Abweichend von FIG 7 ist die untere Kette nicht direkt an die obere Kette angeschlossen, sondern die bildet eine separate Einheit. Die obere und untere Kette sind derart miteinander verschaltet, dass diejenigen Elemente bzw. Multiplexer, die bei der oberen Kette deaktiviert sind, mit der unteren Kette eine Anforderung bearbeiten können.

Zur Auswahl der jeweils relevanten Kette wird das Signal cou(n) benutzt. Dieses Signal ist an Steuereingänge ES einer Anordnung von Multiplexern MX0...n-1 herangeführt, durch welche entschieden wird, ob die obere oder die untere Carry-Kette zur Bildung des Ausgangssignals y0...n herangezogen wird. Wenn cou(n) = "0" dann ist die obere Kette aktiviert, ansonsten, wenn durch die obere Carry-Kette kein aktives Anforderungssignal X0...n-1 bearbeitet wird, ist die untere Carry-Kette aktiv. Da das n-te Element der oberen Carry-Kette nie deaktiviert ist, ist ein n-tes Glied der unteren Kette nicht erforderlich. In FIG 9 ist es jedoch trotzdem zur Bildung des an einen speziellen Ausgang ANZ des Schedulers SCD herangeführten Ausgangssignals col(n) eingesetzt. Hierbei zeigt col(n) = "0" an, dass eine Instanz eine Zuteilung auf die Ressourcen erhielt; col (n) = "1" zeigt an, dass keine Zuteilung eins Zugriffs auf die Ressourcen erfolgte. Für das am Ausgang ANZ anliegende Signal coln gilt folgendes:

$$col(n) = COL(n-1) \text{ \& } /X(n)$$

und

$$col(n) = col(n-1) \text{ \& } cou(n)$$

Die in FIG 9 dargestellte Ausgestaltungsvariante erzeugt keine kombinatorische Schleife, wie die eine Ringstruktur aufweisenden Scheduler. Als weiterer Vorteil weisen diese Ausgestaltungsvarianten keine außergewöhnlich lange Carry-Ketten auf wie die in FIG 7 und 8 dargestellten Round-Robin-Scheduler mit erweiteter Kette. Für die schaltungstechnische Realisierung ist jedoch mehr Kombinatorik erforderlich.

Die beschriebenen, erfindungsgemäßen Scheduler können als Port-Scheduler oder Queue-Scheduler in einem Queue Manager sowie als Port- und Poll-Scheduler in einer UTOPIA-Schnittstelle eines ATM-Layer Controllers eingesetzt werden.

**Patentansprüche**

1. Zuteileinrichtung zur Steuerung des Zugriffs von daran anschließbaren, informationstechnischen, mehrere unterschiedliche Prioritäten (pr0...n) aufweisenden Einheiten (EI0...n) auf von den Einheiten (EI0...n) gemeinsam genutzte, informationstechnische Ressourcen (RES),
   mit mehreren jeweils mit einer der Einheiten verbindbaren Eingängen (E0...n) an welche jeweils ein von der jeweiligen Einheit erzeugtes und die Anforderung eines Zugriffs auf die Ressourcen (RES) repräsentierendes Anforderungssignal (x0...n) herangeführt ist,
   wobei der Zugriff auf die gemeinsam genutzten Ressourcen (RES) in Abhängigkeit von den Prioritäten (pr0...n) der Anforderungssignale gesteuert wird,
   **dadurch gekennzeichnet,**

- **dass** den Eingängen (ES0...n) jeweils ein Ausgang (AS0...n) zugeordnet ist,
- **dass** zwischen den Ein- und Ausgängen (ES0...n, AS0...n) jeweils ein eine Freigabe-/Blockierungseinrichtung repräsentierender Selektor (SEL0...n) angeordnet ist, an welche das jeweilige Anforderungssignal (xo...n) weitergeleitet ist, wobei die Selektoren (SEL0...n) kettenförmig miteinander verbunden sind,
- **dass** bei mehreren an zumindest einen Teil der Eingänge (ES0...n) anliegenden Anforderungssignalen ((x0...n) die Selektoren (SEL0...n) derart ausgestaltet sind,

    -- **dass** das Anforderungssignal (x0...n) mit der höchsten Priorität (pr0...n) an den zugeordneten Ausgang (AS0...n) weitergeleitet wird, und
    -- **dass** das zumindest eine eine niedrigere Priorität (pr0...n) aufweisende Anforderungssignal (x0...n) nicht an den jeweils zugeordneten Ausgang (AS0...n) weitergeleitet wird,

- wobei mit Hilfe des an den Ausgang (AS0...n) weitergeleiteten Anforderungssignals (y0...n) der Zugriff auf die Ressourcen (RES) zugeteilt wird.

2. Zuteileinrichtung nach Anspruch 1,
   **dadurch gekennzeichnet,**
   **dass** der Zuteileinrichtung (SCD) weitere mit den Ausgängen (AS0...n) verbundene Codierungsmittel (ENC) zugeordnet sind, durch welche in Abhängigkeit von dem an einem der Ausgänge (AS0...n) anliegenden Anforderungssignal (y0...n) eine die den aktuellen Zugriff zugeteilte Einheit (EI0...n) eindeutig identifizierende Identifizierungsinformation (arb) gebildet wird

3. Zuteileinrichtung nach Anspruch 1 oder 2,
   **dadurch gekennzeichnet,**
   **dass** die Selektoren (SEL0...n) derart ausgestaltet sind, dass bei von keiner Einheit (EI0...n) erzeugtem Anforderungssignal eine Nicht-Zugriffs-Information (no) erzeugt und an einen Ausgang (ANZ) weitergeleitet wird.

4. Zuteileinrichtung nach Anspruch 2 oder 3,
   **dadurch gekennzeichnet,**
   **dass** die Codierungsmittel (ENC) derart ausgestaltet sind, dass die Identifizierungsinformation (arb) gemäß der Binäroder der Gray-Codierung ausgestaltet ist.

5. Zuteileinrichtung nach einem der vorherigen Ansprüche,
   **dadurch gekennzeichnet,**
   **dass** die Zuteileinrichtung (SCD) derart ausgestaltet ist, dass der aktuelle Zugriff auf die Ressourcen (RES) für einen vorgebbaren Zeitraum zugeteilt wird.

6. Zuteileinrichtung nach einem der vorherigen Ansprüche,
   **dadurch gekennzeichnet,**
   **dass** in der Zuteileinrichtung (STE) den Selektoren (SEL0...n) zugeordnete Speichermittel (MEM) vorgesehen sind, in welcher eine Zugriffs-Information (10...n) speicherbar ist, durch welche diejenige Einheit identifiziert ist, welcher zuletzt während des abgelaufenen Zeitraums der Zugriff auf die Ressourcen zugeteilt worden ist,
   **dass** die Zuteileinrichtung (SCD) und die Speichermittel (MEM) und die Selektoren (SEL0...n) derart ausgestaltet sind, dass derjenigen Einheit (EI0...n) welcher zuletzt während des abgelaufenen Zeitraums der Zugriff auf die Ressourcen (RES) zugeteilt worden ist, anschließend die niedrigste Priorität (pr0...n) zugewiesen wird.

7. Zuteileinrichtung nach einem der vorherigen Ansprüche,
   **dadurch gekennzeichnet,**
   **dass** den Selektoren (SEL0...n) weitere zeitliche Verzögerungsmittel (T0...n) zugeordnet sind, durch welche das Anforderungssignal (x0...n) derjenigen Einheit (EI0...n), welcher zuletzt während des abgelaufenen Zeitraums der Zugriff auf die Ressourcen (RES) zugeteilt worden ist, anschließend für einen vorgebbaren Zeitraum nicht an den entsprechenden Selektor (SEL0...n) weitergeleitet wird.

8. Zuteileinrichtung nach einem der vorherigen Ansprüche,
   **dadurch gekennzeichnet,**
   **dass** die Selektoren (SEL0...n) über Steuerausgänge (AS) und Steuereingänge (ES) kettenförmig miteinander verbunden sind,
   wobei der Steuerausgang (AS) des das letzte Element der Kette repräsentierenden Selektors (SELn) an den Ausgang (ANZ) der Zuteileinrichtung (SCD) geführt ist,
**dass** die Selektoren (SEL0...n) derart ausgestaltet sind,

- **dass** bei annähernd gleichzeitigen Anliegen eines Anforderungssignals (x0...n) am Eingang (ES) eines Selektors und eines Freigabesignals am Steuereingang (ES) dieses Selektors (SEL0...n) ein Blockierungssignal (bs) erzeugt wird, welches über den Steuerausgang (AS) an den Steuereingang (ES) des in der Kette nachfolgend geschalteten Selektors (SEL0...n) übermittelt wird, wobei das Anforderungssignal (x0...n) an den entsprechenden Ausgang (AS0...n) der Zuteileinrichtung (SCD) weitergeleitet wird,
- **dass** ein am Steuereingang (ES) anliegendes Blockierungssignal (bs) über den Steuerausgang (AS) an den Steuereingang (ES) des in der Kette nachfolgend geschalteten Selektors (SEL0...n) weitergeleitet wird, wobei ein am Eingang (ES0...n) anliegendes Anforderungssignal (x0...n) nicht an den entsprechenden Ausgang (AS0...n) weitergeleitet wird,
- **dass** bei Nichtanliegen eines Anforderungssignals am Eingang (E) eines Selektors (SEL0...n) das am Steuereingang (ES) anliegende Freigabe- oder Blockierungssignal (fs, bs) an den Steuereingang (ES) des in der Kette nachfolgend geschalteten Selektors (SEL0...n) weitergeleitet wird.

9. Zuteileinrichtung nach einem der vorherigen Ansprüche,
   **dadurch gekennzeichnet,**
   **dass** die Zuteileinrichtung mit Hilfe eines Field Programmable Gate Array realisiert ist.

10. Zuteileinrichtung nach Anspruch 9,
    **dadurch gekennzeichnet,**
    **dass** die verkettete Verschaltung der Selektoren (SEL0...n) durch mehrere in Kette geschaltete und auf den Field Programmable Gate Array angeordnete Multiplexer realisiert ist.

11. Anordnung nach Anspruch 10,
    **dadurch gekennzeichnet,**
    **dass** die Multiplexer Bestandteil von zumindest einer auf dem Field Programmable Gate Array angeordneten Carry-Kette ist.

FIG 1

FIG 2

EP 1 294 143 A2

FIG 3

# FIG 4

# FIG 5

FIG 6

Reset

L:= Init-Wert

nächste
Berechnung
?

nein

ja

Y=Code für
keine Zuteilung?

nein

Y=gültiger
Code?

nein

ja

ja

keine Zuteilung

Zuteilung
L:= Y

keine Zuteilung
L:= Init-Wert

# FIG 7

EP 1 294 143 A2

## FIG 8

20

FIG 9